# EUROPÄISCHE PATENTSCHRIFT

(11) **EP 0 688 740 B1**
(45) Veröffentlichungstag und Bekanntmachung des Hinweises auf die Patenterteilung: **03.06.1998**
(21) Anmeldenummer: 95104437.9
(22) Anmeldetag: 25.03.1995
(51) Int. Cl.: C03C 1/00, C03B 19/06, C03B 19/09, E04F 13/14

(54) **Verfahren zur Herstellung von natursteinähnlichen, plattenförmigen Bau- und Dekorationsmaterialien und danach hergestellte Materialien**
Method for the production of sheets for building and decoration which resemble natural stone
Procédé de fabrication de plaques pour bâtiments et décorations ressemblant à la pierre naturelle

(30) Priorität: 10.05.1994 DE 4416489
(43) Veröffentlichungstag der Anmeldung: 27.12.1995
(73) Patentinhaber: Schott Glas, 55122 Mainz (DE); CARL-ZEISS-STIFTUNG trading as SCHOTT GLASWERKE, 55122 Mainz (DE)
(72) Erfinder: Greulich, Norbert, Dr., D-55127 Mainz (DE)

(56) Entgegenhaltungen:
- DE-A- 4 123 581
- DE-A- 4 319 808
- DATABASE WPI Week 25 Derwent Publications Ltd., London, GB; AN 95-186407 & CN-A-1 084 120 (J.LIU) , 23.März 1994
- DATABASE WPI Week 26 Derwent Publications Ltd., London, GB; AN 89-185392 & CN-A-8 704 465 (CHONGQOING ARCHITECT) , 25.Mai 1988
- DATABASE WPI Week 12 Derwent Publications Ltd., London, GB; AN 90-089337 & SU-A-1 505 901 (UKR TOWN PLANNING) , 7.September 1989
- GLASS TECHNOLOGY, Bd. 32, Nr. 1, Februar 1991 SHEFFIELD GB, Seiten 24-27, XP 000174905 W.LIU ET AL. 'Sintered mosaic glass from ground waste glass'

## Beschreibung

Die Erfindung betrifft ein Verfahren zur Herstellung von natursteinähnlichen, plattenförmigen Bau- und Dekorationsmaterialien hoher Festigkeit zur Verkleidung von Fassaden, Wänden und Böden im Innen- und Außenbereich aus Abmischungen von gebrochenem Glas, mineralischen Komponenten und feinteiligen Zusätzen und danach hergestellte Materialien.

Für dekorative Anwendungen im Innen- und Außenbereich sind zahlreiche natürliche und künstlich hergestellte Materialien im Einsatz. Breite Verwendung finden von den natürlichen Materialien insbesondere Marmor und Granit, die in großen Mengen zur Innen- und Außenverkleidung von repräsentativen Gebäuden zur Anwendung kommen. Neben dem dekorativen Eindruck muß auch die Korrosionsbeständigkeit und eine wirtschaftliche Herstellung gewährleistet sein. Natürlich vorkommende Materialien genügen diesen Anforderungen nicht immer, da sich häufig nicht genügend große Flächen mit einheitlichem Eindruck herstellen lassen und da die Korrosionsbeständigkeit und die Festigkeit aufgrund der Porösität des natürlichen Materiales nicht immer optimal ist.

So ist aus der DE 41 25 698 C1 ein glaskeramisches Material mit einer Zusammensetzung (in Gew.-% auf Oxidbasis) von

| | |
|---|---|
| SiO₂ | 64.1 - 72 |
| Al₂O₃ | 2.9 - 11 |
| CaO | 15.0 - 26 |
| MgO | 0 - 8 |
| ZnO | 0 ≤ 2 |
| BaO | 0 - 0.5 |
| K₂O | 0 - 7.4 |
| Na₂O | 0 - 2 |
| F | 0.5 - 4 |

wobei Σ Na₂O, K₂O mindestens 2 beträgt, bekannt, das als Natursteinersatz für dekorative Anwendungen und zum Belegen von Fußböden und Verkleiden von Wänden und Fassaden in der Bauwirtschaft Verwendung findet.

Glaskeramik als Natursteinersatz bietet zwar ein gutes dekoratives Erscheinungsbild ist aber z. B. auch wegen seines aufwendigen Keramisierungsprozesses aufwendig und teuer herzustellen. Des weiteren werden zur Herstellung relativ reine und damit wertvolle Rohstoffe benötigt.

Die DE 41 23 581 A1 offenbart ein Verfahren zur Herstellung von Formkörpern aus Glasgranalien, insbesondere Bauplatten, bei dem aus einer Mischung aus zerkleinertem Glas und einem Blähmittel Rohgranalien hergestellt werden und diese Rohgranalien unter Wärmeeinwirkung gebläht werden können, wobei
- zunächst eine Lage aus ungeblähten Rohgranalien und darüber eine Schicht aus geblähten Schaumglasgranalien in noch heißem oder auch kaltem Zustand als Haufwerk in eine Form geschüttet werden
- und das Haufwerk auf 700 bis 900°C, vorzugsweise 800 - 900°C erhitzt wird
- und dann unter einem Druck von 0,005 - 0,015 N/mm² um 5 - 15 % verdichtet wird, wobei ein Formkörper mit festem Verbund entsteht.

Diese nach dem Verfahren der DE 41 23 581 A1 hergestellten Bauplatten eignen sich besonders als Dämmplatten in einem Wärmedämmverbundsystem, wobei die die Platten aufbauenden Rohgranalien vorher erst energieintensiv erzeugt werden müssen.

Aufgabe der vorliegenden Erfindung ist es, ein Verfahren zur Herstellung von dekorativen, natursteinähnlichen, witterungsbeständigen, und gegen saure und alkalische Medien beständige, auch großformatige plattenförmige Baumaterialien hoher Festigkeit, vorzustellen mit dem es möglich ist, kostengünstig und umweltfreundlich ohne organische Zusätze mit preiswerten und jederzeit verfügbaren Rohstoffen wie Glas, Altglas und natürlichen anorganischen Zuschlagstoffen Verkleidungsplatten für Fassaden, Wände und Böden zu produzieren, die alle baurechtlich und - behördlichen Auflagen erfüllen und darüber hinaus den Anforderungen nach ästhetischem zeitgemäßem Design bei variabler Gestaltungsmöglichkeit genügen.

Des weiteren ist es Aufgabe der Erfindung, die Herstellungsparameter so zu wählen, daß durch die vorgeschlagene Vorgehensweise und eine geeignete Temperaturführung bei der Herstellung der Baumaterialien die Platten
- nicht mit der Produktionsform reagieren
- sich keine Unebenheiten auf der Plattenoberfläche ergeben
- die Platten nicht deformieren,
- sich keine Blasen, Poren, Einschlüsse und/oder Mikrorisse in der Deckschicht ausbilden,
- keine Schleif- und Polierarbeiten anfallen, und
- hohe Biegezugfestigkeiten aufweisen.

Die Aufgabe wird nach der Erfindung durch die Verfahrensschritte 1.1 - 1.5 nach Anspruch 1 gelöst.

Nach der Bereitstellung der in den temperaturbeständigen Formen vergleichmäßigten Abmischungen beginnt die thermische Behandlung mit der Trocknung in der Form, bei Temperaturen zwischen 60 bis 110 °C. Darauf folgt:

### Verfahrensschritt 1.3:

Aufheizen der Abmischung bis auf eine Temperatur von 720-1100°C. Die Höhe der jeweiligen Temperatur ist von der chemischen Zusammensetzung der Charge und der Sorte des Glasgranulates abhängig. Die Aufheizzeit beträgt etwa maximal 36 h bei einer Aufheizgeschwindigkeit von 0,5 K/min. auf 1100°C und minimal 3.8 h bei einer Aufheizgeschwindigkeit von 3 K/min. auf 720°C.

In bevorzugter Ausführungsform des Verfahrens kann unterhalb der Glasübergangstemperatur mit bis zu 12 K/min. aufgeheizt werden, was die genannten Zeiträume entsprechend verkürzt.

### Verfahrensschritt 1.4:

Die vergleichmäßigten Abmischungen werden bei dieser Temperatur, also zwischen 720 - 1100 °C gehalten. Die Haltezeit beträgt von 20 bis 120 min., abhängig von der Plattendicke. Typischerweise wird eine Lage mit einer Ausgangsdicke von 45 mm 60 min. ausgeglüht. Die Temperaturdifferenzen an der Plattenoberfläche sollten nicht größer als ± 10 K sein. Bei größeren Temperaturdifferenzen werden die Plattenränder uneben, die Dicke der umgeschmolzenen Schicht an den Rändern ungleichmäßig, so daß Teile des Randes aus Qualitätsgründen abgeschnitten werden müßten. Dieser Schritt ist wichtig im Hinblick auf die Herstellung einer qualitativ hochwertigen Oberflächenschicht. Die Temperatur dieses Verfahrensschrittes muß über eine Zeit gehalten werden, die das Erreichen eines stationären thermischen Zustandes ermöglicht. Mit Verkürzung der Haltezeit wird die Plattenoberfläche zunehmend stumpf und rauh.

Die Temperaturbeaufschlagung erfolgt gleichmäßig von allen Seiten, in einer großtechnischen Version, bevorzugt in einem Durchlaufofen mit kontinuierlichem oder Schrittbetrieb.

Die Bestimmung der maximalen Verfahrenstemperatur für Chargen verschiedener Zusammensetzungen ist besonders wichtig. Wird die Temperatur zu hoch gewählt, wird die Viskosität zu klein, entstehen auf der Oberfläche der Platte Fehler wegen übermäßiger Entgasung der tieferliegenden Materiallagen. Wird die Temperatur zu tief gewählt, werden die optimalen mechanischen Eigenschaften nicht erreicht. Der gleiche negative Effekt wird erreicht, wenn die maximale Verfahrenstemperatur zu kurze Zeit einwirkt. Die Temperaturdifferenzen auf der Oberfläche dürfen ± 10 K nicht überschreiten. Die maximale Temperatur ist abhängig von der chemischen Zusammensetzung der Charge und deren Korngrößenverteilung und beträgt z. B. typischerweise von 720 bis 1100 °C.

### Verfahrensschritt 1.5:

Die Abkühlung bis auf Raumtemperatur erfolgt in einer Zeitspanne die benötigt wird, um eine gleichmäßige Temperaturverteilung über die gesamte Dicke der Platte zu erreichen, in einer Zeitspanne von maximal 36 h bei einer Ausgangstemperatur von 1100 °C und einer Kühlrate von 0,5 K/min. und minimal 3 h bei einer Temperatur von 720°C einer Kühlrate von 3 K/min., und einer Entnahme der Platte bei 200 °C aus dem Ofen.

In bevorzugter Verfahrensvariante kann das Abkühlen aber auch in zwei Teilschritten erfolgen, nämlich mit 0,5 - 3,0 K/min. auf 700 - 400 °C und mit 3 - 12 K/min. weiter auf Raumtemperatur. Hierdurch wird eine weitere Verfahrensbeschleunigung erreicht.

Die erfindungsgemäßen Platten können problemlos sowohl in einem Kammerofen mit programmgesteuerter Aufheiz- und Abkühlrate, als auch in einem Durchlaufofen mit entsprechender Temperaturverteilung hergestellt werden.

Es wurden auch Platten bei Temperaturen von 200 °C dem Ofen direkt entnommen.

In bevorzugter Ausführungsform kann nach der Erfindung während der Aufheizphase zwischen 400 °C und 600 °C eine Haltezeit von 30 bis 60 min. und während der Abkühlphase zwischen 600 °C und 400 °C eine Haltezeit von 20 bis 60 min. vorgesehen sein.

Dies hat den Vorteil, daß in jedem Fall ein stationärer thermischer Zustand in der Platte erreicht wird.

Nach der Erfindung kann als gebrochenes Glas ein Glasgranulat aus recycliertem Fernsehglas, Flachglas und/oder aus Hohlglas, wie z. B. von Flaschen und Behältern, und deren Mischungen eingesetzt werden.

Aufgrund der erwarteten Rücknahmeverpflichtungen für gebrauchte Elektrogeräte werden mittelfristig auch sehr große Mengen an gebrauchten Bildröhren und Backofenscheiben anfallen. Diese zurückgenommenen Gläser können nach der Erfindung einer hochwertigen Weiterverwendung zugeführt werden.

Die verwendeten Gläser sollten eine Zusammensetzung in den Grenzen von (in Ma.-%)

| | | | |
|---|---|---|---|
| SiO₂ | 55 - 82 | insbesondere | 55 - 65 |
| Al₂O₃ | 1 - 4 | insbesondere | 1 - 4 |
| Na₂O | 2 - 16 | insbesondere | 6 - 10 |
| K₂O | 0 - 10 | insbesondere | 6 - 10 |
| MgO | 0 - 5 | insbesondere | 0 - 3 |
| CaO | 0 - 12 | insbesondere | 0 - 5 |
| PbO | 0 - 3 | insbesondere | 0 - 3 |
| BaO | 0 - 15 | insbesondere | 1 - 15 |
| B₂O₃ | 0 - 15 | insbesondere | 0 |
| SrO | 0 - 11 | insbesondere | 0 - 11 |
| ZnO | 0 - 1 | insbesondere | 0 - 1 |
| ZrO₂ | 0 - 3 | insbesondere | 0 - 3 |
| TiO₂ | 0 - 1 | insbesondere | 0 - 1 |
| CeO₂ | 0 - 1 | insbesondere | 0 - 1 |
| Sb₂O₃ | 0 - 1 | insbesondere | 0 - 1 |
| As₂O₃ | 0 - 1 | insbesondere | 0 - 1 |
| F | 0 - 1 | insbesondere | 0 - 1 |

aufweisen und in einer Körnung von 0.2 - 3 mm und mit einem Feuchtigkeitsanteil von 1 - 3 % eingesetzt werden.

Das Glasgranulat sollte bevorzugt eine Körnung von 0,3 bis 1 mm haben. Experimentell wurde festgestellt, daß im Falle einer größeren oder kleineren Körnigkeit eine Verschlechterung der mechanischen Eigenschaften der Platte möglich ist. Bei einer zu kleinen Körnung bilden sich innere Hohlräume und Poren. Die Feuchtigkeit des Glasgranulats vor dem Mischen mit Sand sollte nicht weniger als 2 % betragen.

Im Falle der Anwendung von trockenen Ausgangsstoffen muß Wasser beigegeben werden, um die Ausgangsmischung homogen in die Form einzubringen und eine Entmischung durch ein Absetzen und Durchrieseln der fein- und feinstteiligen Zusätze aus dem oberen Bereich der Abmischung in die unteren Bereiche zu verhindern.

In bevorzugter Ausführungsform werden als mineralische Komponenten, insbesondere natürlicher oder synthetischer Kalksandstein, Quarzsand, Granit, Ziegelmehl, Klinker und/oder keramische Materialien, wie Porzellanscherben, aber auch Glimmer und/oder Fasern in Körnungen bzw. in Längen von < 3 mm, bevorzugt < 0,4 mm und in Mengen bis maximal 14,7 Ma.-% eingesetzt.

Anstelle des Kalksandsteins können auch Abmischungen aus Quarzsand und insbesondere gebranntem Kalk eingesetzt werden, um die Reproduzierbarkeit der Zugabe dieser mineralischen Komponente zu verbessern.

Als feinteilige Zusätze werden nach der Erfindung 0,3 - 5 Ma.-% eines oder mehrerer hochtemperaturbeständiger Oxide, insbesondere ZrO₂ und/oder TiO₂ und/oder SnO und/oder MgO und/oder CaO und/oder eines Mischoxides wie Kaolin und/oder ZrSiO₄ eingesetzt.
Die Teilchengrößen dieser feinteiligen Zusätze betragen dabei < 60 µm, insbesondere < 20 µm.

Bekannt ist die Keimbildungswirkung von feinteiligem TiO₂, ZrO₂ und anderen Oxiden bei der Herstellung von Glaskeramiken mittels gezielter Kristallisation aus der Schmelze. Außerdem wird insbesondere ZrO₂ zur Dispersionsverstärkung von Sinterprodukten aus Glaskeramik eingesetzt. Alle genannten Oxide können auch als temperaturbeständige weiße Pigmente verwendet werden.

Möglicherweise spielen diese o. g. Wirkungsmechanismen auch eine Rolle, um die hervorragenden physikalischen und chemischen Eigenschaften der Materialien nach der Erfindung zu erklären.

Als weitere feinkörnige Zusätze können anorganische Farbpigmente und/oder Metalloxide und/oder Glaspulver und/oder Schlacken in Teilchengrößen < 60 µm, insbesondere auch < 20 µm in Mengen zwischen 0 - 5,0 Ma.-% zugegeben werden.

Auch Glasfasern können in den o. g. Mengen- und Dimensionsbegrenzungen eingemischt werden.

Die Abmischungen nach der Erfindung werden aus 85 - 98 Ma.-% gebrochenem Glas, 0 - 14,7 Ma.-% einer mineralischen Komponente und aus insgesamt 0,3 - 5 Ma.-% feinteiligen Zusätzen hergestellt, wobei aber die Oberfläche der Lage der Abmischung, in einer Schichtstärke von 3 - 7 mm auch aus 100 Ma.-% gebrochenem Glas hergestellt werden kann.

Das Verfahren zur Herstellung der dekorativen, natursteinähnlichen Baumaterialien nach der Erfindung wird anhand der nachfolgenden Beispiele weiter erläutert:

### Beispiel 1:

95 Ma.-% recycliertes Fernseh-Schirmglas der Zusammensetzung (in Ma.-%):
SiO₂ 60,1; Al₂O₃ 2,1; Na₂O 9,0; K₂O 7.0; MgO 1,9; CaO 2,6; BaO 13,1; SrO 0,3; ZnO 0,5; ZrO₂ 2,1; TiO₂ 0,5; CeO₂ 0,2; Sb₂O₃ 0,6 und
der Körnung 0,3 - 1,0 mm, 3,8 Ma.-% Kalksandstein der Körnung < 0,4 mm, 0,1 Ma.-% Pigment (Typ H 54122 ultramarin, Fa. Heraeus) werden mit 1,0 Ma.-% Zirkonoxid der Körnung < 0,02 mm zunächst trocken in einem Taumelmischer vermischt.
Nach 10 min. werden 2 Ma.% Wasser zugefügt und weitere 15 min. gemischt. Die feuchte Mischung wird in eine feuerfeste Form 45 mm hoch eingefüllt und egalisiert.

Die innere Oberfläche der Form wurde vorher mit einem Trennmittel (z. B. einer Kaolin-Suspension) beschichtet.

Die Form besteht aus üblichem feuerbeständigem oder feuerfestem Material. Vorteilhaft ist z. B. Cordierit oder SiC wie es auch für Brennhilfsmittel in der keramischen Industrie überall Verwendung findet.

Dabei muß das Formenmaterial so gewählt werden, daß bei den Prozeßtemperaturen ein Sintern ("Verbacken") der Form mit der Abmischung unterbleibt.

Nach einer Trocknungszeit von etwa 10 Stunden bei 60 °C wird die gefüllte Form in einem Kammerofen mit folgendem Temperatur-/Zeit-Programm getempert:
Temperaturanstiegsrate 0,5 K/min. bis 650 °C, dann 1 h Haltezeit,
Temperaturanstiegsrate 0,5 K/min. bis 1000 °C, dann 1 h Haltezeit,
Abkühlung auf Raumtemperatur mit 0,5 K/min.

Es entsteht eine stahlblaue Platte mit geschlossener, glänzender Oberfläche und einer Biegezugfestigkeit zwischen 21 und 22 N/mm². Die fertige Platte hat eine einheitliche Materialstärke von 23 mm.

### Beispiel 2:

85 Ma.-% recycliertes Fernseh-Schirmglas der Zusammensetzung (in Ma.-%):
SiO₂ 61,5; Al₂O₃ 3,1; Na₂O 9,3; K₂O 7.0; MgO 1,7; CaO 2,4; BaO 12,5; SrO 1,2; ZrO 0,2; TiO₂ 0,4; CeO₂ 0,2; Sb₂O₃ 0,5 und
der Körnung 0,3 - 1,0 mm, 12,0 Ma.-% recycliertes grünes Flaschenglas der Körnung < 0,4 mm und 2,0 Ma.-% Kalksandstein der Körnung < 0,4 mm, werden mit 1,0 Ma.-% Zirkonoxid der Körnung < 0,02 mm zunächst trocken in einem Taumelmischer vermischt.

Nach 10 min. werden 2 Ma.% Wasser zugefügt und weitere 15 min. gemischt. Die feuchte Mischung wird in eine feuerfeste Form 33 mm hoch eingefüllt. Die innere Oberfläche der Form wurde vorher wieder mit einem Trennmittel (z. B. einer Kaolin-Suspension) beschichtet.

Nach einer Trocknungszeit von 10 Stunden bei 60 °C wird die gefüllte Form in einem Sinterofen mit folgendem Temperatur-/Zeit-Programm getempert:
Temperaturanstiegsrate 0,5 K/min. bis 650 °C, dort 1 h Haltezeit,
Temperaturanstiegsrate 0,5 K/min. bis 1000 °C, dort 1 h Haltezeit,
Abkühlung auf Raumtemperatur mit 0,5 K/min.

Dabei entsteht eine hellgrüne Platte mit geschlossener, glänzender Oberfläche und einer Biegezugfestigkeit zwischen 19 und 23 N/mm². Die fertige Platte hat eine einheitliche Materialstärke von 16 mm.

### Beispiel 3:

94 Ma.-% recycliertes Fernseh-Schirmglas der Zusammensetzung wie in Beispiel 1 und der Körnung 0,4 - 1,0 mm, 5,0 Ma.-% Kalksandstein der Körnung < 0,4 mm, 0,1 Ma.-% Pigment (Typ H 26140 rotbraun, Fa. SCHOTT GLASWERKE) werden mit 1,0 Ma.-% Zirkonoxid der Körnung < 0,02 mm zunächst trocken in einem Taumelmischer vermischt.
Nach 10 min. werden 2 Ma.-% Wasser zugefügt und weitere 15 min. gemischt.
Die feuchte Mischung wird in eine feuerfeste Form 20 mm hoch eingefüllt.

Diese Schüttung wird mit einer 5 mm dicken Schicht aus reinem recycliertem Fernseh-Schirmglas der Körnung 0,5 - 1,0 mm gleichmäßig überstreut.

Die Innenseite der Form wurde vorher wieder mit einer Kaolin-Suspension beschichtet.

Nach einer Trocknungszeit von 10 Stunden bei 60 °C wird die gefüllte Form in einem Sinterofen mit folgendem Temperatur-/Zeit-Programm getempert:
Temperaturanstiegsrate 2,0 K/min. bis 650 °C, dort 0,5 h Haltezeit,
Temperaturanstiegsrate 2,0 K/min. bis 850 °C, dort 2 h Haltezeit,
Abkühlung auf 500 °C mit 1,0 K/min, dort 0,5 h Haltezeit,
Abkühlung auf Raumtemperatur mit 3,0 K/min.

Es entsteht eine violette Platte mit geschlossener, glänzender Oberfläche und einer Biegezugfestigkeit zwischen 18 und 20 N/mm². Die fertige Platte hat eine einheitliche Materialstärke von 12 mm.

### Beispiel 4:

90 Ma.-% recycliertes Fernseh-Schirmglas der Zusammensetzung wie in Beispiel 2 und der Körnung 0,4 - 1,0 mm, 9,0 Ma.-% Kalksandstein der Körnung < 0,4 mm, werden mit 1,0 Ma.-% Zirkonoxid der Körnung < 0,02 mm zunächst trocken in einem Taumelmischer vermischt.
Nach 10 min. werden 2 Ma.-% Wasser zugefügt und weitere 15 min. gemischt.
Die feuchte Mischung wird in eine feuerfeste Form 20 mm hoch eingefüllt.
Die innere Oberfläche der Form wurde vorher wieder mit einem Trennmittel (z. B. einer Kaolin-Suspension) beschichtet.

Nach einer Trocknungszeit von 10 Stunden bei 60 °C wird die gefüllte Form in einem Sinterofen mit folgendem Temperatur-/Zeit-Programm getempert:
Temperaturanstiegsrate 3,0 K/min. bis 1000 °C, dort 20 min. Haltezeit,
Abkühlung auf 200 °C mit 2,0 K/min,
Entnahme der Platte aus dem Ofen.

Dabei entsteht eine hellgraue Platte mit geschlossener, glänzender Oberfläche und einer Biegezugfestigkeit zwischen 15 und 18 N/mm². Die fertige Platte hat eine einheitliche Materialstärke von 10 mm.

Diese Platte kann dann auch ausschließend problemlos mit den, jedem einschlägigen Fachmann bekannten Maßnahmen bei 650 - 800°C gesenkt und z. B. bis herunter zu Biegeradien von 150 mm gebogen werden, z. B. um sie bestimmten Fassadenstrukturen anzupassen.
Im vorliegenden Beispiel wurde die Platte zum Biegen auf 720°C erwärmt.

Die Beispiele liefern sehr haltbare, natursteinähnliche Bau- und Dekorationsmaterialien mit langer Lebensdauer. Sie finden Anwendung für Verkleidungen von Außen- und Innenwänden von Objekten des Industrie-, Wohnungs- und Verkehrs-Bauwesens, für Möbel, Arbeitsplatten in Küchen und Labors und für dekorative Kunstwerke. Es zeichnet sich durch eine hohe Festigkeit und Härte aus. Es ist hygienisch, leicht zu reinigen, hochtemperaturfest, chemisch beständig, elektrisch nicht leitend und nicht brennbar.

In Bezug auf die physikalischen, chemischen und mechanischen Eigenschaften ist das vorgestellte Bau- und Dekorationsmaterial besser als natürliche, teure Materialien, wie z. B. Granit, Marmor oder Travertin.

Die geometrischen Grenzen der Erfindung liegen etwa bei Plattengrößen von 2000 mm Länge und 1000 Breite, bei einer minimalen Plattendicke von 6 mm und einer maximalen Plattendicke von 40 mm.

Die Befestigung der Platten nach der Erfindung erfolgt beispielsweise über eine Halterungsanordnung wie sie in der EP 04 11 442 B1 vorgestellt wird oder über die derzeit üblichen und marktbekannten Anordnungen.

Die Vorteile der Bau- und Dekorationsmaterialien nach der vorliegenden Erfindung sind:
1. Die Biegezugfestigkeit beträgt mindestens 14 - 18 MPa, bei Verwendung von ZrO₂ 19-23 MPa.
2. Keine Mikrorisse an der Oberfläche, so daß eine Fleckenbeständigkeit nach DIN EN 122 von Klasse 1 erreicht wird.
3. Das Aussehen von verschiedenen Platten ist einheitlicher und damit reproduzierbarer als von Platten, die ohne die erfindungsgemäßen Zusätze gefertigt werden, die trotz unveränderter Fertigungsparameter häufig völlig verschiedenartiges Aussehen aufweisen.
4. Die "Anmutung" der Plattenoberfläche wirkt weitaus lebendiger und ähnelt stark bestimmten natürlichen Gesteinssorten, z. B. Granit.
5. Die Materialoberflächen sind farblich und strukturell frei gestaltbar.
6. Ein eigenständiges, geschmackvolles Aussehen ist reproduzierbar.
7. Das Material weist im Inneren sehr wenige Blasen auf (bei einer evtl. Oberflächenpolitur treten Blasen störend in Erscheinung).
8. Die Verwendung von Recyclinggläsern schont die Natursteinvorräte und macht so das erfindungsgemäße Verfahren auch ökologisch interessant.

## Patentansprüche

1. Verfahren zur Herstellung von natursteinähnlichen, plattenförmigen Bau- und Dekorationsmaterialien hoher Festigkeit zur Verkleidung von Fassaden, Wänden und Böden im Innen- und Außenbereich aus Abmischungen von gebrochenem Glas, mineralischen Komponenten und feinteiligen Zusätzen, mit den Verfahrensschritten
1.1 Einbringen einer ebenen, gleichmäßig dicken Lage der Abmischung in eine temperaturbeständige Form,
1.2 Trocknen in der Form bei 60 bis 110 °C,
1.3 Aufheizen der Lage mit 0,5 - 3,0 K/min. auf 720 - 1100°C
1.4 Halten dieser Temperatur 20 - 120 min.
1.5 Abkühlen der Lage mit 0,5 - 3.0 K/min auf Raumtemperatur,
**dadurch gekennzeichnet**,
daß die Abmischungen aus 85 - 98 Ma.-% gebrochenem Glas, 0 - 14,7 Ma.-% einer mineralischen Komponente und aus insgesamt 0,3 - 5 Ma.-% feinteiligen Zusätzen hergestellt werden.

2. Verfahren nach Anspruch 1,
**dadurch gekennzeichnet**,
daß als gebrochenes Glas ein Glasgranulat mit der Zusammensetzung von (in Ma.-%):
| | |
|---|---|
| SiO₂ | 55 - 82 |
| Al₂O₃ | 1 - 4 |
| Na₂O | 2 - 16 |
| K₂O | 0 - 10 |
| MgO | 0 - 5 |
| CaO | 0 - 12 |
| PbO | 0 - 3 |
| BaO | 0 - 15 |
| B₂O₃ | 0 - 15 |
| SrO | 0 - 11 |
| ZnO | 0 - 1 |
| ZrO₂ | 0 - 3 |
| TiO₂ | 0 - 1 |
| CeO₂ | 0 - 1 |
| Sb₂O₃ | 0 - 1 |
| As₂O₃ | 0 - 1 |
| F | 0 - 1 |
und einer Körnung von 0,2 bis 3 mm, insbesondere 0,3 bis 1 mm und einem Feuchtigkeitsanteil von 1 - 3 Ma.-%, insbesondere 2 Ma.-% Wasser eingesetzt wird.

3. Verfahren nach Anspruch 2,
**dadurch gekennzeichnet**,
daß als Glas ein Glasgranulat aus recycliertem Bildröhrenglas, insbesondere der Zusammensetzung (in Ma.-%):
| | |
|---|---|
| SiO₂ | 55 - 65 |
| Al₂O₃ | 1 - 4 |
| Na₂O | 6 - 10 |
| K₂O | 6 - 10 |
| MgO | 0 - 3 |
| CaO | 0 - 5 |
| PbO | 0 - 3 |
| BaO | 1 - 15 |
| SrO | 0 - 11 |
| ZnO | 0 - 1 |
| ZrO₂ | 0 - 3 |
| TiO₂ | 0 - 1 |
| CeO₂ | 0 - 1 |
| Sb₂O₃ | 0 - 1 |
| As₂O₃ | 0 - 1 |
| F | 0 - 1 |
eingesetzt wird.

4. Verfahren nach Anspruch 1,
**dadurch gekennzeichnet**,
daß als mineralische Komponente 0 - 14,7 Ma.-%, insbesondere Kalksandstein und/oder Quarzsand und/oder keramische Materialien und/oder Klinker, in Körnungen von < 3 mm, ins besondere < 0,4 mm eingesetzt werden.

5. Verfahren nach Anspruch 1,
**dadurch gekennzeichnet**,
daß als feinteilige Zusätze 0,3 - 5 Ma.-% eines oder mehrerer hochtemperaturbeständiger Oxide, insbesondere ZrO₂, MgO, SnO, CaO und/oder TiO₂ und/oder eines Mischoxides, insbesondere Kaolin und/oder ZrSiO₄, in Teilchengrößen < 60 µm, insbesondere < 20 µm, zugesetzt werden.

6. Verfahren nach mindestens einem der vorhergehenden Ansprüche,
**dadurch gekennzeichnet**,
daß weitere feinteilige Zusätze, insbesondere anorganische Pigmente und/oder Metalloxide und/oder Gläser, insbesondere Farbgläser mit Teilchengrößen < 60 µm, insbesondere < 20 µm in Mengen zwischen 0 - 5 Ma.-% zugegeben werden.

7. Verfahren nach den Ansprüchen 1 bis 6,
**dadurch gekennzeichnet**,
daß die Oberfläche der Lage in einer Schichtstärke von 3 - 7 mm, insbesondere von 4 - 6 mm aus 100 Ma.-% gebrochenem Glas hergestellt wird.

8. Verfahren nach den Ansprüchen 1 bis 7,
**gekennzeichnet durch**
daß auf die Oberfläche der Lage feinteilige Metallpartikel, insbesondere aus Eisen, Kupfer, Nickel, Chrom, Stahl und/oder deren Salze aufgebracht werden.

9. Bau- und Dekorationsmaterialien hergestellt nach den Ansprüchen 1 bis 8,
**gekennzeichnet durch**
eine Biegefestigkeit von ≥ 14 M Pa

## Claims

1. Process for producing tabular building and decorative materials similar to natural stone and having high strength for the facing of facades, walls and floors in interior and exterior applications from mixtures of crushed glass, mineral components and finely divided additives, comprising the process steps of
1.1 introducing a level, uniformly thick layer of the mixture into a temperature-resistant mould,
1.2 drying in the mould at from 60 to 110°C,
1.3 heating the layer at 0.5 - 3.0 K/min to 720 - 1100°C
1.4 holding this temperature for 20 - 120 min
1.5 cooling the layer at 0.5 - 3.0 K/min to room temperature,
characterized in that
the mixtures are produced from 85 - 98% by mass of crushed glass, 0 - 14.7% by mass of a mineral component and a total of 0.3 - 5% by mass of finely divided additives.

2. Process according to Claim 1, characterized in that the crushed glass used is a granulated glass having the composition (in % by mass):
| | |
|---|---|
| SiO₂ | 55 - 82 |
| Al₂O₃ | 1 - 4 |
| Na₂O | 2 - 16 |
| K₂O | 0 - 10 |
| MgO | 0 - 5 |
| CaO | 0 - 12 |
| PbO | 0 - 3 |
| BaO | 0 - 15 |
| B₂O₃ | 0 - 15 |
| SrO | 0 - 11 |
| ZnO | 0 - 1 |
| ZrO₂ | 0 - 3 |
| TiO₂ | 0 - 1 |
| CeO₂ | 0 - 1 |
| Sb₂O₃ | 0 - 1 |
| As₂O₃ | 0 - 1 |
| F | 0 - 1 |
and a grain size of from 0.2 to 3 mm, in particular from 0.3 to 1 mm, and a moisture content of 1 - 3% by mass, in particular 2% by mass, of water.

3. Process according to Claim 2, characterized in that the glass used is a granulated glass of recycled picture tube glass, in particular of the composition (in % by mass):
| | |
|---|---|
| SiO₂ | 55 - 65 |
| Al₂O₃ | 1 - 4 |
| Na₂O | 6 - 10 |
| K₂O | 6 - 10 |
| MgO | 0 - 3 |
| CaO | 0 - 5 |
| PbO | 0 - 3 |
| BaO | 1 - 15 |
| SrO | 0 - 11 |
| ZnO | 0 - 1 |
| ZrO₂ | 0 - 3 |
| TiO₂ | 0 - 1 |
| CeO₂ | 0 - 1 |
| Sb₂O₃ | 0 - 1 |
| As₂O₃ | 0 - 1 |
| F | 0 - 1. |

4. Process according to Claim 1, characterized in that the mineral components used are 0 - 14.7% by mass of, in particular, calcareous sandstone and/or quartz sand and/or ceramic materials and/or clinker, in grain sizes of < 3 mm, in particular < 0.4 mm.

5. Process according to Claim 1, characterized in that the finely divided additives which are added are 0.3 - 5% by mass of one or more high-temperature-resistant oxides, in particular ZrO₂, MgO, SnO, CaO and/or TiO₂ and/or a mixed oxide, in particular kaolin and/or ZrSiO₄, in particle sizes of < 60 µm, in particular < 20 µm.

6. Process according to at least one of the preceding claims, characterized in that additions are made of further finely divided additives, in particular inorganic pigments and/or metal oxides and/or glasses, in particular coloured glasses having particle sizes of < 60 µm, in particular < 20 µm, in amounts of 0 - 5% by mass.

7. Process according to any of Claims 1 to 6, characterized in that the surface of the layer is, in a thickness of 3 - 7 mm, in particular of 4 - 6 mm, made of 100% by mass of crushed glass.

8. Process according to any of Claims 1 to 7, characterized in that finely divided metal particles, in particular of iron, copper, nickel, chromium, steel and/or their salts, are applied to the surface of the layer.

9. Building and decorative materials produced according to any of Claims 1 to 8, characterized in that they have a flexural strength of ≥ 14 MPa.

## Revendications

1. Procédé de fabrication de plaques pour bâtiments et décorations de haute résistance en forme de plaques et ressemblant à la pierre naturelle, pour le revêtement de façades, de murs et de sols à l'intérieur et à l'extérieur, à partir de mélanges de verre pilé, de composants minéraux et d'additifs finement divisés, avec les étapes de procédé consistant à
1.1 disposer une couche plate et uniformément épaisse du mélange dans un moule résistant à la température;
1.2 sécher dans le moule entre 60 et 110°C;
1.3 chauffer la couche à 0,5-3,0 K/min jusqu'à 720-1100°C;
1.4 maintenir cette température durant 20-120 min,
1.5 refroidir la couche à 0,5-3,0 K/min jusqu'à la température ambiante,
caractérisé en ce que
les mélanges sont préparés à partir de 85-98% en masse de verre pilé, de 0-14,7% en masse d'un composant minéral et de 0,3-5% en masse au total d'additifs finement divisés.

2. Procédé suivant la revendication 1, caractérisé en ce que
le verre pilé utilisé consiste en un granulé de verre ayant la composition (en % en masse) :
| | |
|---|---|
| SiO₂ | 55 - 82 |
| Al₂O₃ | 1 - 4 |
| Na₂O | 2 - 16 |
| K₂O | 0 - 10 |
| MgO | 0 - 5 |
| CaO | 0 - 12 |
| PbO | 0 - 3 |
| BaO | 0 - 15 |
| B₂O₃ | 0 - 15 |
| SrO | 0 - 11 |
| ZnO | 0 - 1 |
| ZrO₂ | 0 - 3 |
| TiO₂ | 0 - 1 |
| CeO₂ | 0 - 1 |
| Sb₂O₃ | 0 - 1 |
| As₂O₃ | 0 - 1 |
| F | 0 - 1 |
et une granulométrie de 0,2 à 3 mm, en particulier de 0,3 à 1 mm, et une fraction d'humidité de 1 à 3% en masse, en particulier de 2% en masse d'eau.

3. Procédé suivant la revendication 2, caractérisé en ce que
le verre utilisé consiste en granulés de verre provénant de verre de tubes cathodiques recyclés, en particulier de composition (en % en masse) :
| | |
|---|---|
| SiO₂ | 55 - 65 |
| Al₂O₃ | 1 - 4 |
| Na₂O | 6 - 10 |
| K₂O | 6 - 10 |
| MgO | 0 - 3 |
| CaO | 0 - 5 |
| PbO | 0 - 3 |
| BaO | 1 - 15 |
| SrO | 0 - 11 |
| ZnO | 0 - 1 |
| ZrO₂ | 0 - 3 |
| TiO₂ | 0 - 1 |
| CeO₂ | 0 - 1 |
| Sb₂O₃ | 0 - 1 |
| As₂O₃ | 0 - 1 |
| F | 0 - 1 |

4. Procédé suivant la revendication 1, caractérisé en ce que
les composants minéraux utilisés sont constitués de 0-14,7% en masse, en particulier de pierre chaux-grès et/ou de sable siliceux et/ou de matériaux céramiques et/ou de brique hollandaise, de granulométrie < 3 mm, en particulier < 0,4 mm.

5. Procédé suivant la revendication 1, caractérisé en ce que
les additifs finement divisés utilisés sont constitués de 0,3-5% en masse d'un ou plusieurs oxydes résistants à des températures élevées, en particulier ZrO₂, MgO, SnO, CaO et/ou TiO₂ et/ou d'un oxyde mixte, en particulier le kaolin et/ou le ZrSiO4, de granulométries < 60 µm, en particulier < 20 µm.

6. Procédé suivant au moins l'une des revendications précédentes,
caractérisé en ce que
l'on ajoute d'autres additifs finement divisés, en particulier des pigments inorganiques et/ou des oxydes métalliques et/ou des verres, en particulier du verre coloré de granulométries < 60 µm, en particulier < 20 µm, en des quantités comprises entre 0 et 5% en masse.

7. Procédé suivant les revendications 1 à 6, caractérisé en ce que
la surface de la couche est fabriquée avec une épaisseur de couche de 3-7 mm, en particulier de 4-6 mm de 100% en masse de verre pilé.

8. Procédé suivant les revendications 1 à 7,
caractérisé en ce que
l'on dispose sur la surface de la couche des particules métalliques finement divisées, en particulier de fer, de cuivre, de nickel, de chrome, d'acier et/ou de leurs sels.

9. Matériaux pour bâtiments et décorations préparés suivant les revendications 1 à 8,
caractérisés par
une résistance à la flexion ≥ 14 MPa.
